# EUROPEAN PATENT SPECIFICATION

(11) **EP 2 193 565 B1**
(45) Date of publication and mention of the grant of the patent: **26.08.2015**
(21) Application number: 08833982.5
(22) Date of filing: 24.09.2008
(51) Int. Cl.: H01M 4/86, H01M 4/92, H01M 8/02

(54) **FUEL CELL SYSTEM**
BRENNSTOFFZELLENSYSTEM
SYSTÈME DE PILE À COMBUSTIBLE

(30) Priority: 24.09.2007 US 860354
(43) Date of publication of application: 09.06.2010
(73) Proprietor: BDF IP Holdings Ltd, Vancouver, British Columbia V6C 2X8 (CA)
(72) Inventor: HE, Ping, Surrey, British Columbia V3X1T1 (CA); YE, Siyu, Burnaby, British Columbia V5H 1S2 (CA); BAI, Kyoung, J., Cranbrook, British Columbia V1C 5Y4 (CA)
(74) Representative: Beyer, Andreas
(86) International application number: PCT/US2008/077491
(87) International publication number: WO 2009/042665

(56) References cited:
- WO-A-02/091504
- US-A- 5 795 669
- US-A1- 2004 045 819
- US-A1- 2004 197 627
- US-B1- 6 309 769
- US-B1- 6 517 962
- SANTIAGO E I ET AL: "Studies of CO tolerance on modified gas diffusion electrodes containing ruthenium dispersed on carbon" JOURNAL OF ELECTROANALYTICAL CHEMISTRY AND INTERFACIALELECTROCHEMISTRY, ELSEVIER, AMSTERDAM, NL, vol. 575, no. 1, 15 January 2005 (2005-01-15), pages 53-60, XP004696340 ISSN: 0022-0728
- YU H ET AL: "Composite anode for CO tolerance proton exchange membrane fuel cells" JOURNAL OF POWER SOURCES, ELSEVIER, AMSTERDAM, NL, vol. 105, no. 1, 5 March 2002 (2002-03-05), pages 52-57, XP004343605 ISSN: 0378-7753
- WEE ET AL: "Overview of the development of CO-tolerant anode electrocatalysts for proton-exchange membrane fuel cells" JOURNAL OF POWER SOURCES, ELSEVIER, AMSTERDAM, NL, vol. 157, no. 1, 19 June 2006 (2006-06-19), pages 128-135, XP005685207 ISSN: 0378-7753

## Description

### BACKGROUND

### Technical Field

The present disclosure relates to fuel cell systems with increased robustness to cell voltage reversal, electrocatalyst poisoning and catalyst crossover.

### Description of the Related Art

Fuel cells convert fuel and oxidant to electricity and reaction product. Proton exchange membrane fuel cells employ a membrane electrode assembly ("MEA") consisting of a proton exchange membrane ("PEM") (also known as an ionexchange membrane) interposed between an anode and cathode. The anode typically includes electrocatalyst and binder, often a dispersion of polytetrafluoroethylene (PTFE) or other hydrophobic polymer, such as described in US 5,395,705, and may also include a filler (e.g., carbon). Anodes are also described that comprise electrocatalyst and an ionomer (e.g., US 5,998,057) and a mixture of electrocatalyst, ionomer and binder (e.g., US 5,242,765). The presence of ionomer in the electrocatalyst layer effectively increases the electrochemically active surface area of the electrocatalyst, which requires an ionically conductive pathway to the cathode electrocatalyst to generate electric current. The cathode may similarly include electrocatalyst and binder.

The anode and cathode may be bonded or sealed to the PEM to form a single integral unit known as the membrane electrode assembly (MEA). The MEA is further interposed between two fluid flow plates to form a fuel cell assembly. The plates allow access of reactants to the MEA, act as current collectors, and provide support for the adjacent electrodes. A plurality of fuel cell assemblies may be combined to form a fuel cell stack.

At the anode, fuel, typically in the form of hydrogen gas, reacts at the electrocatalyst in the presence of the PEM to form hydrogen ions and electrons. At the cathode, oxidant reacts in the presence of the PEM at the electrocatalyst to form anions. The PEM isolates the fuel stream from the oxidant stream and facilitates the migration of the hydrogen ions from the anode to the cathode where they react with anions formed at the cathode. The electrons pass through an external circuit, creating a flow of electricity. The net reaction product is water. The anode and cathode reactions in hydrogen gas fuel cells are shown in the following equations:

H₂ → 2H⁺ + 2e⁻ (1)

½O₂ + 2H⁺ + 2e⁻ → H₂O (2)

In practice, fuel cells need to be robust to varying operating conditions, especially in applications that impose numerous on-off cycles and/or require dynamic, load-following power output, such as automotive applications. In particular, fuel cells need to be robust with respect to electrocatalyst poisoning that may reduce fuel cell performance and/or durability.

In some hydrogen fuel cell systems, hydrogen fuel is produced by converting a hydrocarbon-based fuel such as methane, or an oxygenated hydrocarbon fuel such as methanol, to hydrogen in a process known as reforming. This reformate fuel contains, in addition to hydrogen, small amounts of impurities such as carbon monoxide, typically at levels of around 1%. Commercially available fuel may also contain levels of impurities that may poison fuel cell catalyst and reduce fuel cell performance. For example, it is well known that carbon monoxide, even at levels of 1-10 ppm, is a severe poison for noble metal electrocatalysts present in the electrodes, particularly platinum, adsorbing to the electrocatalyst layer thereby blocking the electrocatalytic sites. Such electrocatalyst poisons lead to a significant reduction in fuel cell performance.

One approach to make fuel cells more robust with respect to electrocatalyst poisoning has been described by, e.g., Niedrach et al in Electrochemical Technology, Vol. 5, 1967, p318, where it was found that the use of a bimetallic anode electrocatalyst comprising platinum/ruthenium, rather than monometallic platinum, shows a reduction in the poisoning effect of carbon monoxide at typical PEM fuel cell operating temperatures. Hence, Pt-Ru catalysts are typically employed as PEM fuel cell anode electrocatalysts.

Another approach to make fuel cells more robust with respect to electrocatalyst poisoning has been to dispose a carbon monoxide filter layer either beside the electrocatalyst layer or beside the anode flow field plate, such as that disclosed in US 6,309,769. In some embodiments in US 6,309,769, the carbon monoxide filter layer is formed of ruthenium (e.g. ruthenium disposed on carbon black). However, where a carbon monoxide filter layer is disposed beside the electrocatalyst, fuel cell performance and/or durability may degrade over time. Similarly, where a carbon monoxide filter layer is disposed beside the flow field plate, fuel cell tolerance to poisoning decreases over time.

Fuel cells also need to be robust with respect to cell voltage reversals. Cell voltage reversal occurs when a fuel cell in a series stack cannot generate sufficient current to keep up with other cells in the series stack. Several conditions can lead to voltage reversal in a PEM fuel cell, for example, including insufficient oxidant, insufficient fuel, insufficient water, low or high cell temperatures, and certain problems with cell components or construction. Reversal generally occurs when one or more cells experience a more extreme level of one of these conditions compared to other cells in the stack. While each of these conditions can result in negative fuel cell voltages, the mechanisms and consequences of such a reversal may differ depending on which condition caused the reversal. Groups of cells within a stack can also undergo voltage reversal and even entire stacks can be driven into voltage reversal by other stacks in an array. Aside from the loss of power associated with one or more cells going into voltage reversal, this situation poses reliability concerns. Undesirable electrochemical reactions may occur, which may detrimentally affect fuel cell components. Component degradation reduces the reliability and performance of the affected fuel cell, and in turn, its associated stack and array.

Fuel cells can be made more tolerant to cell reversal by promoting water electrolysis over anode component oxidation at the anode. This can be accomplished by incorporating an additional catalyst composition at the anode to promote the water electrolysis reaction, as described in U.S. Pat. No. 6,936,370. During reversal, water present in the anode catalyst layer can be electrolyzed and oxidation (corrosion) of anode components, including carbon catalyst supports, if present, can occur. It is preferred to have water electrolysis occur rather than component oxidation. Thus, by incorporating a catalyst composition that promotes the electrolysis of water, more of the current forced through the fuel cell during voltage reversal can be consumed in the electrolysis of water than the oxidation of anode components. Among the catalyst compositions disclosed in U.S. Pat. No. 6,936,370 were Pt-Ru alloys, RuO₂ and other metal oxide mixtures and/or solid solutions including Ru.

US 2004/0013935 also describes an approach to improving cell voltage reversal tolerance by using anodes employing both a higher catalyst loading (at least 60 wt % catalyst) on an optional corrosion-resistant support, and incorporating certain unsupported catalyst compositions to promote the water electrolysis reaction. Disclosed preferred compositions include oxides characterized by the chemical formulae RuOₓ and IrOₓ, where x is greater than 1 and particularly about 2, and wherein the atomic ratio of Ru to Ir is greater than about 70:30, and particularly about 90:10.

However, Ru has been shown to be unstable under certain fuel cell operating conditions. For example, Piela et al. (J. Electrochem. Soc., 151 (12), A2053-A2059 (2004)), describe Ru crossover from Pt-Ru black catalyst and redeposition at the Pt cathode catalyst in direct methanol fuel cells (DMFC).

It is therefore, desirable to have a fuel cell system that is more robust to electrocatalyst poisoning and cell voltage reversals as well as catalyst crossover. The present disclosure addresses these needs and provides associated benefits.

US 2004/0197627 A1 describes a fuel cell including a MEA, electrically conductive members and electrically conductive fluid distribution elements. The electrically conductive members are gas diffusion media and the electrically conductive fluid distribution elements are bipolar plates. A PrOx catalyst, capable of facilitating and enhancing the reduction of CO, is disposed on surface of the electrically conductive member that is adjacent to a flow field of the electrically conductive fluid distribution element. Alternatively, the PrOx catalyst may also be disposed on a surface of the electrically conductive member that is adjacent the MEA. The MEA comprises a PEM, an anode electrode and a cathode electrode. The anode electrode and the cathode electrode are comprised of catalyst carbon, wherein the catalyst is a capable of catalyzing the electrochemical oxidation of H₂ and the electrochemical reduction of O₂.

WO 02/091504 A1 shows a polymer electrolyte fuel cell with an MEA, which is prepared by application of a catalyst to one side of an ionomeric membrane and a catalyst to the other side of the membrane. A backing layer adjacent to the MEA contains a CO oxidation catalyst coated onto the backing layer such that the catalyst sites are available to both CO and O₂ molecules in the gas phase. The CO oxidation catalyst adjoins to a gas manifold, through which reformate fuel gas is input. The backing layer exhibits gas transport properties.

Santiage et al. "Studies of CO tolerance on modified gas diffusion electrodes containing ruthenium dispersed on carbon", Journal of Electroanalytical Chemistry, Vol. 575 (1), p. 53-60, describes a polymer electrolyte fuel cell including a modified gas diffusion electrode with a CO filtering layer and a catalyst layer. The modified gas diffusion layer has a face of Ru/C in contact with the catalyst layer. Alternatively, the modified gas diffusion layer has a face of Ru/C on the opposite side (gas side) with respect to the catalyst layer.

US 2004/0045819 A1 describes an anode structure comprising a ruthenium catalyst, a gas diffusion substrate and an electrocatalyst. The ruthenium catalyst and the electrocatalyst are arranged such that a reactant gas stream will first contact the ruthenium catalyst and thereafter contact the electrocatalyst. A layer of the electrocatalyst is present on a first face of the gas diffusion substrate and the ruthenium catalyst is present on either the second face of the gas diffusion substrate or on the first face of the gas diffusion substrate underneath the layer of the electrocatalyst.

### BRIEF SUMMARY

At least one of the above needs is met by a fuel cell system according to claim 1.

One embodiment may be summarized as a fuel cell and a reactant supply for supplying a reactant comprising gaseous hydrogen and a poisoning species, to the fuel cell including a membrane electrode assembly, the membrane electrode assembly including a cathode substrate; an anode substrate; a proton exchange membrane disposed between the cathode substrate and the anode substrate; an electrochemically separating sublayer disposed between the proton exchange membrane and the anode substrate; a poison-scrubbing catalyst layer disposed between the electrochemically separating sublayer and the anode substrate; an anode electrocatalyst layer disposed between the proton exchange membrane and the electrochemically separating sublayer; and a cathode electrocatalyst layer disposed between the cathode substrate and the proton exchange membrane.

The poisoning species may comprise carbon monoxide. The electrochemically separating sublayer may be comprised of carbon and polytetrafluoroethylene. The electrochemically separating layer omits a cation conducting ionomer or may omit conducting material. The electrochemically separating sublayer may be comprised of carbon. The poison-scrubbing catalyst may comprise platinum, ruthenium, tin, molybdenum, nickel, gold, iron, cobalt, palladium, gold and combinations thereof. The poison-scrubbing catalyst may comprise platinum, ruthenium and combinations thereof. The poison-scrubbing catalyst may be supported on a catalyst support. The catalyst support may be carbon, tungsten oxide, tungsten carbide, and combinations thereof. The catalyst support may be zeolite, silica, alumina, and titania and combinations thereof. The poison-scrubbing catalyst loading may be less then about 0.06 mg/cm². The anode electrocatalyst may comprise platinum. The anode electrocatalyst loading may be less then about 0.06 mg/cm². The proton exchange membrane may be perfluorinated membrane, partially-fluorinated membrane and non-fluorinated membrane.

One embodiment may be summarized as a fuel cell system comprising a fuel cell stack; and a reactant supply for supplying a reactant comprising gaseous hydrogen and a poisoning species, the fuel cell stack including a plurality of fuel cells, each fuel cell comprising a membrane electrode assembly, the membrane electrode assembly including an anode substrate; a cathode substrate; an anode poison-scrubbing catalytic component; an electrochemically separating sublayer; and an anode electrocatalytic component; wherein the poison-scrubbing catalytic component is active at gas-phase reaction sites and the electrocatalytic catalytic component is active at electrochemical reaction sites; wherein the poison-scrubbing catalytic component and the electrocatalytic catalytic component are physically separated by the electrochemically separating sublayer; and the poison-scrubbing and electrocatalytic catalytic components are arranged such that a reactant stream will contact the poison-scrubbing catalytic component and thereafter contact the electrocatalytic catalytic component.

The poison-scrubbing catalytic component may be one which is capable of treating a reactant stream gas to reduce the concentration of the poisoning species. The poisoning species may be carbon monoxide. The electrocatalytic component may enhance a rate of an electrochemical reaction greater than a rate associated with carbon. The electrocatalytic component may enhance a rate of a hydrogen oxidation reaction greater than a rate associated with carbon.

These and other aspects of the various embodiments will be evident from the attached drawings and following detailed description.

### BRIEF DESCRIPTION OF THE SEVERAL VIEWS OF THE DRAWINGS

In the figures, identical reference numbers identify similar elements or acts. The sizes and relative positions of elements in the figures are not necessarily drawn to scale. For example, the shapes of various elements and angles are not drawn to scale, and some of these elements are arbitrarily enlarged and positioned to improve figure legibility. Further, the particular shapes of the elements, as drawn, are not intended to convey any information regarding the actual shape of the particular elements, and have been solely selected for ease of recognition in the figures.
Figure 1 is schematic diagram of a fuel cell system
Figure 2 is a cross-sectional diagram of a membrane electrode assembly for a fuel cell system according to one illustrated embodiment.
Figure 3 is a cross-sectional diagram of a membrane electrode assembly for a fuel cell system according to another illustrated embodiment.
Figure 4 is a graph of cell voltage versus current density.
Figure 5 is a graph of cell voltage versus fuel composition.
Figure 6 is a graph of a cell voltage versus time.
Figure 7 is a graph of cell voltage versus current.

### DETAILED DESCRIPTION

The headings and Abstract of the Disclosure provided herein are for convenience only and do not interpret the scope or meaning of the embodiments.

In the following description, certain specific details are set forth in order to provide a thorough understanding of various disclosed embodiments. However, one skilled in the relevant art will recognize that embodiments may be practiced without one or more of these specific details, or with other methods, components, materials, etc. In other instances, well-known structures associated with fuel cells, MEAs, fluid flow plates, and/or PEMs have not been shown or described in detail to avoid unnecessarily obscuring descriptions of the embodiments.

Unless the context requires otherwise, throughout the specification and claims which follow, the word "comprise" and variations thereof, such as "comprises" and "comprising" are to be construed in an open, inclusive sense, that is as "including but not limited to".

Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Further more, the particular features, structures, or characteristics may be combined in any suitable manner in one or more embodiments.

As used in this specification and the appended claims, the singular forms "a," "an," and "the" include plural referents unless the content clearly dictates otherwise. It should also be noted that the term "or" is generally employed in its sense including "and/or" unless the content clearly dictates otherwise.

As used herein, the term layer or sublayer does not necessarily mean a laminate but may mean a coating, spray or decal or other deposition that fully or only partially covers, coats, or impregnates a material.

As used herein, the term hydrophobic is to be understood as a relative term and does not refer to any particular value or scale of hydrophobicity.

As used herein, the phrase "electrochemically separating" means preventing cation conductivity or substantially preventing cation conductivity.

As used herein, the term combinations are to be understood to include alloys and mixtures.

The present teachings are particularly suitable for fuel cells and MEAs comprising a PEM, though those of ordinary skill in the art will appreciate that they may be employed with other types of MEAs or fuel cells.

It has been discovered that electrochemically separating poison scrubbing catalysts, or reversal tolerant catalysts, such as platinum-ruthenium, from the anode electrocatalyst will eliminate the pathway for any such catalyst or ions thereof to reach and cross over the PEM to the cathode.

It has also been discovered that disposing such catalyst beside the anode flow field plate provides a pathway for the catalyst to wash out of the fuel cell with unused reactant or reaction products. It has further been discovered that disposing the such catalyst between the anode substrate and an electrochemically separating sublayer, prevents such catalyst from being washed out of the fuel cell, therefore preserving the fuel cell's tolerance to both poisoning species in the hydrogen gas fuel, such as carbon monoxide, and the fuel cell's tolerance to cell reversal.

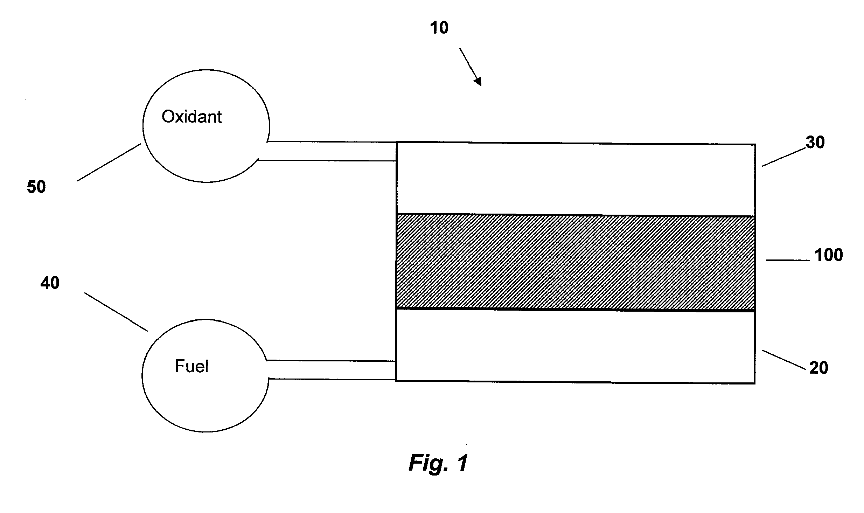

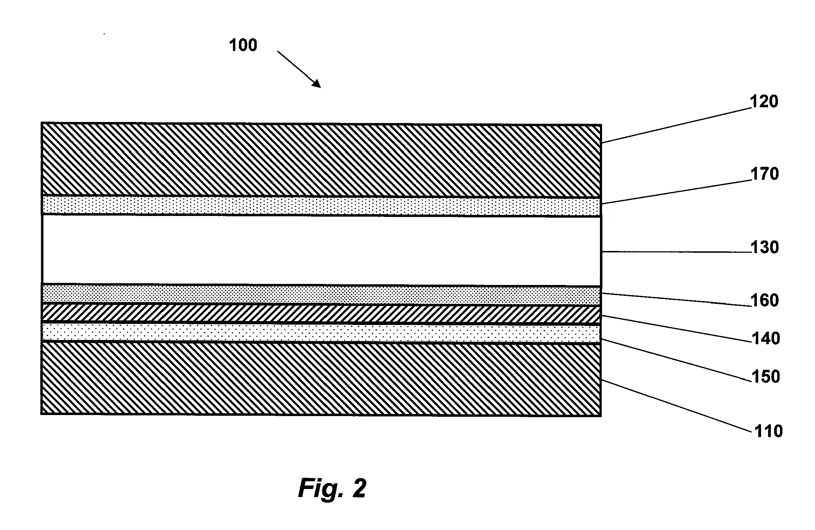

Figure 1 shows an embodiment of a fuel cell system 10 including MEA 100 disposed between anode flow field plate 20 and cathode flow field plate 30. In operation, fuel flows from a fuel source providing gas phase hydrogen 40 and enters anode flow field plate and MEA 100. MEA 100 is further described below in respect of Figure 2. Similarly, oxidant flows from oxidant source 50 through the cathode flow field plates 30 and MEA 100. Operation of the fuel cell system 10 is also described below.

Figure 2 shows MEA 100 comprising anode substrate 110, cathode substrate 120 and PEM 130 disposed therebetween. Electrochemically separating sublayer 140 is disposed between a poison-scrubbing catalyst layer 150 and an anode electrocatalyst layer 160 which are collectively disposed between the anode substrate 110 and PEM 130 such that anode electrocatalyst layer 160 is more proximate PEM 130 than poison-scrubbing catalyst layer 150. MEA 110 further comprises a cathode electrocatalyst layer 170 disposed between cathode substrate 120 and PEM 130.

Anode and cathode substrates 110, 120 are electrically conductive and porous materials. Exemplary suitable anode and cathode substrates 110, 120 include carbon fiber papers, such as the TGP-H or TGP-60 material supplied by Toray Industries, Inc. (Japan) and the AvCarb® material supplied by Ballard Material Products, Inc. (Lowell, MA), as well as perforated flexible expanded graphite sheets. Additionally, a hydrophobic sublayer material, such as polytetrafluoroethylene (PTFE) (not shown), may be dispersed in or on the anode or cathode substrate 110, 120. One skilled in the art will readily select a suitable anode and cathode substrate material and sublayers for a given set of fuel cell operating conditions. The use of the hydrophobic sublayer is optional.

Poison-scrubbing catalyst layer 150 catalyses a reaction between water and/or oxygen and the fuel poison, such as carbon monoxide, to effectively remove such poisons from the fuel stream before the fuel interacts with the anode electrocatalyst in the anode electrocatalyst layer 160. Poison-scrubbing catalyst layer 150 may include catalyst means for scrubbing or entrapping elements and/or compounds that are poisonous *(i.e.,* reduce performance or efficiency) to the fuel cell, for example catalyst materials including agglomerates, mixtures or alloys of platinum-ruthenium (PtRu), platinum-tin (PtSn), platinum-molybdenum (PtMo), platinum-nickel (PtNi), platinum-gold (PtAu), platinum-iron (PtFe), platinum-cobalt (PtCo), platinum-palladium (PtPd), platinum-tungsten (PtW) or gold nanoparticles. Poison-scrubbing catalyst materials in the poison-scrubbing catalyst layer 150 may be supported on catalyst support means, for example an electrically conductive carbon support, electrically conductive non-carbon support, electrically semiconductive non-carbon support or may be unsupported. Exemplary suitable electrically conductive carbon supports include Vulcan carbon supplied by Cabot Corp., Boston MA, acetylene black (supplied by Denki Kagaku Kogyo Kabushiki Kaisha, Japan) or others such as graphite or graphitized carbon. Exemplary suitable electrically conductive non-carbon supports include metal oxides such as tungsten-oxides (including WO₃) or metal carbides such as tungsten carbides (including W₂C and WC). Electrically semiconductive supports such as zeolite, silica, alumina, titania can be admixed with carbon to increase electronic conductivity such that resistive losses are reduced to an acceptable level. The catalyst support material in the poison-scrubbing catalyst layer 150 (if a catalyst support is employed) may be different from that in the anode electrocatalyst layer. One skilled in the art will readily select a suitable catalyst support material for a given set of fuel cell operating conditions. Loading of the poison scrubbing catalyst may be 0.06 mg/cm² or less depending on the quality of the fuel. Poison-scrubbing catalyst layer 150 may further include carbon and may further include PTFE, to increase hydrophobicity.

Electrochemically separating sublayer 140 may comprise an electrically conductive material such as carbon, graphite or graphitized carbon and may also include PTFE to increase hydrophobicity. Electrochemically separating sublayer 140 should be sufficiently porous or microporous so as to permit the flow of reactants to the anode electrocatalyst layer, permit the flow of product water out of the fuel cell, and should be sufficiently electrically conductive such that resistive losses are reduced to an acceptable level.

Exemplary suitable carbon materials include, carbon black supplied by Cabot Corp., Boston MA or acetylene black supplied by Denki Kagaku Kogyo Kabushiki Kaisha, Japan. One skilled in the art will readily select a suitable carbon material for a given set of fuel cell operating conditions. Without being bound by theory, electrochemically separating sublayer 140 electrochemically separates poison-scrubbing catalyst layer 150 from the anode electrocatalyst layer 160, preventing crossover of Ru and Ru species from crossing over the PEM to the cathode. This may be achieved by ensuring no ionomer material from the PEM or acidic solution is located throughout the electrochemically separating sublayer 140.

Anode and cathode electrocatalyst layers 160, 170 may respectively include any fuel cell reaction catalyst including precious metals, such as platinum, ruthenium, tin, tungsten and molybdenum or mixtures or alloys thereof. Alternatively, the anode and cathode electrocatalysts 160, 170 may include a non-noble metal catalyst such as a chalcogenide. Anode and cathode electrocatalysts 160, 170 may be supported on an electrically conductive support. Exemplary suitable electrically conductive carbon supports include Vulcan carbon supplied by Cabot Corp., Boston MA, acetylene black (supplied by Denki Kagaku Kogyo Kabushiki Kaisha, Japan) or others such as graphite or graphitized carbon. Exemplary suitable electrically conductive non-carbon support includes metal oxides such as tungsten-oxides (including WO₃) or metal carbides such as tungsten carbides (including W₂C and WC) and transition metal phosphides such as those disclosed in US patent application 60/829946 entitled "Catalyst Support for Fuel Cell". Anode and cathode electrocatalysts 160, 170 may have like or differing compositions. One skilled in the art will readily select a suitable anode and cathode electrocatalysts 160, 170 for a given set of fuel cell operating conditions.

PEM 130 may take the form of membrane means for selectively conducting cations, for example perfluorinated, partially-fluorinated, or non-fluorinated ion exchange membranes. Exemplary suitable PEM 130 include Nafion® (supplied by DuPont™), Gore-Select® (supplied by Gore™), BAM® (supplied by Ballard Power Systems, Inc., Canada), and Aciplex® (supplied by Asahi Kasei Corp., Japan). One skilled in the art will readily select a suitable PEM material for a given set of fuel cell operating conditions.

Sealing frames (not shown) may be employed to seal the MEA to the fluid flow plates, provide structural support to the MEA. Sealing frames may be polyesters, polyethylenes, polypropylenes, polyimides, and thermosets. The sealing frame may be a rigid laminate material that imparts a desired rigidity to the resulting sealed MEA after sealing. Sealing frames may also contain a pressure-activated adhesive, such as a silicone or acrylic-based adhesive, or may contain a thermally-activated adhesive that may be a thermoset, a thermoplastic, or combinations thereof. One skilled in the art will readily select a suitable frame material and adhesive material for a given set of fuel cell operating conditions. Sealing frames may further have wing areas including ports for the transport of reactants and reaction products (not shown).

In operation, fuel flows from a fuel source having gas-phase hydrogen 40 and enters anode flow field plate 20. Fuel first interacts with the catalyst material in the poison-scrubbing catalyst layer 150 to remove poisoning impurities such as carbon monoxide. Fuel then proceeds through the electrochemically separating sublayer 140 to the anode electrocatalyst layer 160 where it is catalyzed to produce ions and electrons in the presence of the PEM 130 as described above. Electrons pass through an external circuit (not shown) to the cathode. Similarly, oxidant flows from oxidant source 50 through the cathode flow field plates 30 and through the cathode substrate 120 where water is produced as described above. Electrochemically separating sublayer 140 prevents poison scrubbing catalyst materials from crossing-over into the cathode. Further, disposing the poison scrubbing layer between the anode substrate 110 and the electrochemically separating sublayer 140, prevents catalytic material from washing out of the fuel cell.

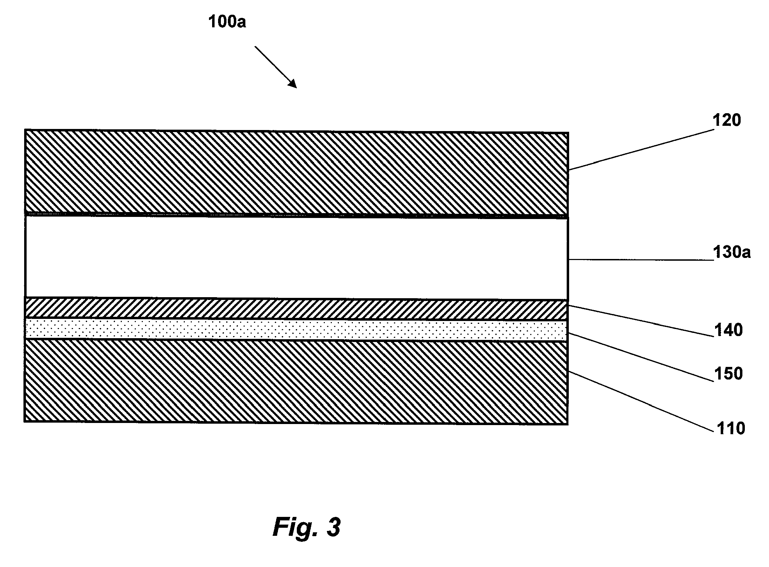

Figure 3 shows an alternate embodiment, MEA 100a comprising an anode substrate 110, cathode substrate 120, catalyst coated membrane 130a, electrochemically separating sublayer 140, and poison-scrubbing catalyst layer 150. Catalyst coated membrane (CCM) 130a includes an anode electrocatalyst layer (not shown) and cathode electrocatalyst layer (not shown) disposed on the two major surfaces of CCM 130.

MEA 100a may be made by disposing CCM 130a between cathode substrate 110 and anode substrate 120, disposing poison-scrubbing catalyst layer 150 between anode substrate 110 and CCM 130a and disposing separating sublayer between poison-scrubbing catalyst layer 150 and CCM 130a.

### EXAMPLES

Carbon fiber paper from Toray (TGP-60) was teflonated with a PTFE content of 18% to yield an anode substrate layer.

Poison-scrubbing layer was prepared as an ink by mixing (a) 500 grams of HiSPEC 5000 (including a 20% Pt and 10% Ru catalyst supported on Vulcan carbon, commercially available from Johnson Matthey), (b) 120 grams of Denka carbon, (c) 266 grams of 60% PTFE solution, (d) 68 grams of methyl cellulose, and (e) 3678 grams of deionized water. The poison-scrubbing layer ink was then coated onto anode substrate and was sintered at 365 °C, leaving a Pt-Ru poison-scrubbing catalyst layer. The anode substrate with poison-scrubbing layer was then dried at 180 °C under air.

Electrochemically separating sublayer was prepared by mixing 92.42% deionized water, with 4.54% dry powder Denka carbon black, 1.95% PTFE solids dispersion available from E.I. Dupont, 1.01% Methocel A4M Premium 4000 CPS 2wt% methyl cellulose available from Dow Chemical and a 1.08% Surfynol DF110D defoamer available from St. Lawrence Chemical. The mixture was heated to 80 degrees Celsius for 50 minutes and vacuum degassed for 70 minutes at approximately 200 mbar to produce an ink slurry. The sublayer ink slurry was then K-coated on the anode substrate with poison-tolerant layer, dried at room temperature and sintered via a two-step sintering at 250 degrees Celsius and 365 degrees Celsius, each for 10 minutes, leaving a sublayer comprised of 79.5% carbon and 20.5% PTFE.

A separate catalyst-coated membrane (CCM) was prepared with an anode electrocatalyst layer and cathode electrocatalyst layer, each comprising carbon-supported platinum disposed on either side. The anode substrate (with poison-scrubbing catalyst layer and sublayer), CCM and cathode substrate were bonded at 160 °C and under 20 bar of pressure for 2.5 minutes.

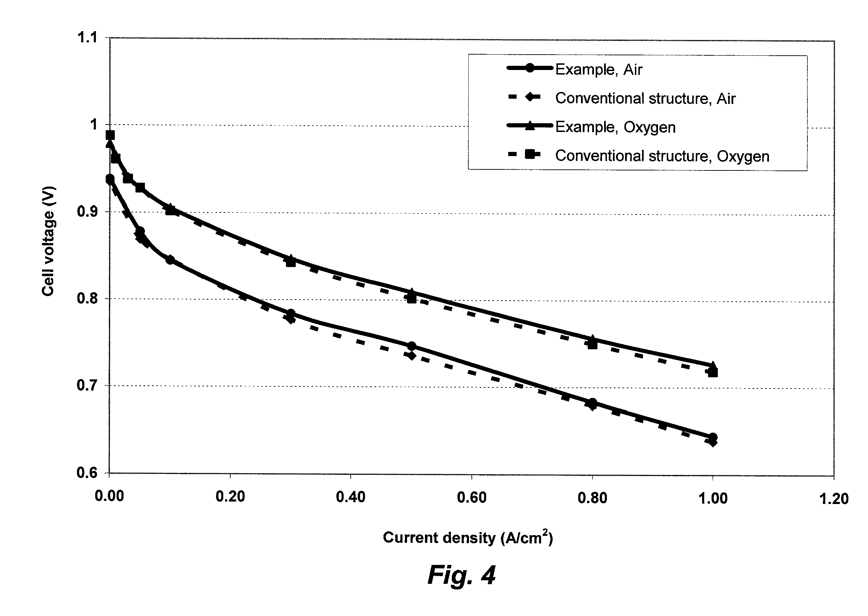

Figure 4 shows a polarization curve performance comparison of the example structure described above and a conventional structure, comprised of a PEM disposed between a cathode electrocatalyst layer comprising platinum and an anode electrocatalyst layer comprising platinum and ruthenium each respectively disposed between gas diffusion layers. The polarization curve shows no negative performance impact of the example structure described above as compared to the conventional structure.

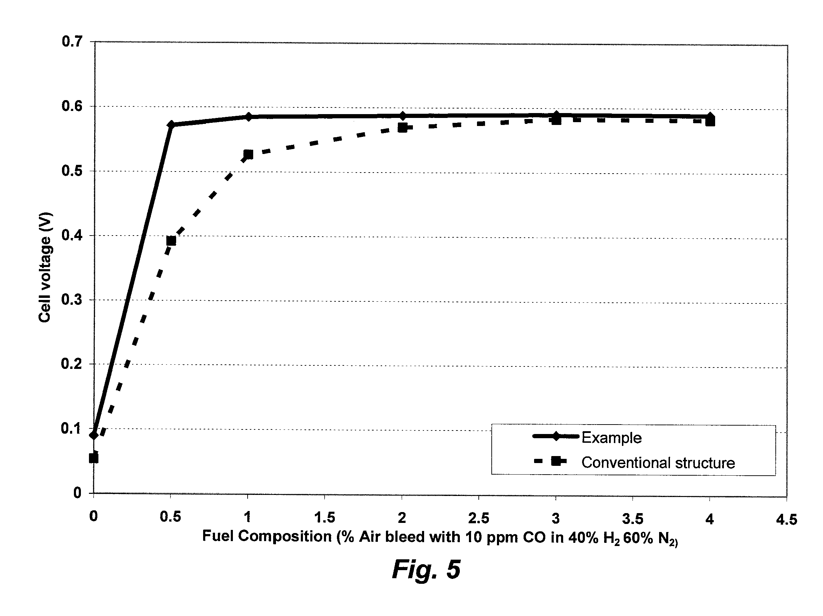

Figure 5 shows improved carbon monoxide tolerance of the example structure as compared to the conventional structure.

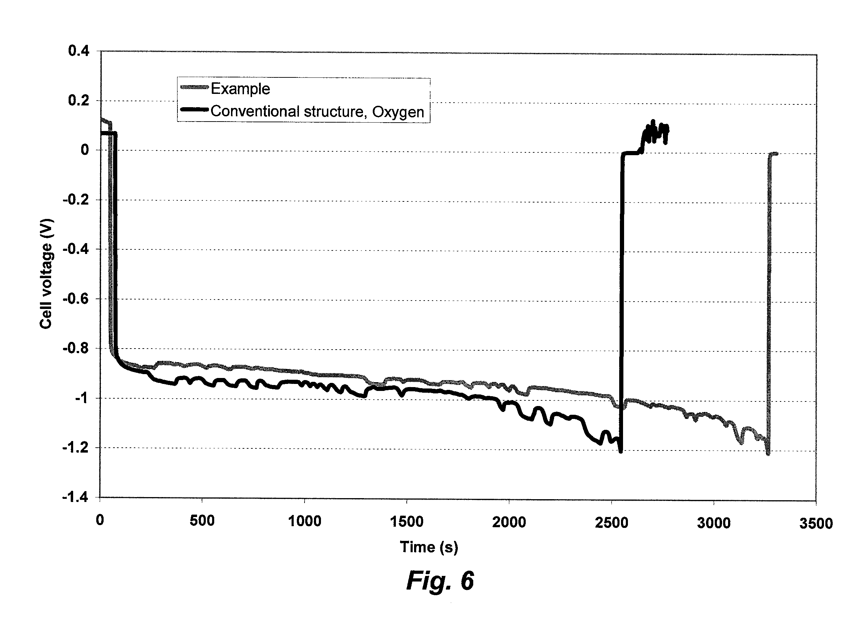

Figure 6 shows surprisingly improved cell reversal tolerance of the example structure as compared to the conventional structure at -0.2 A/cm².

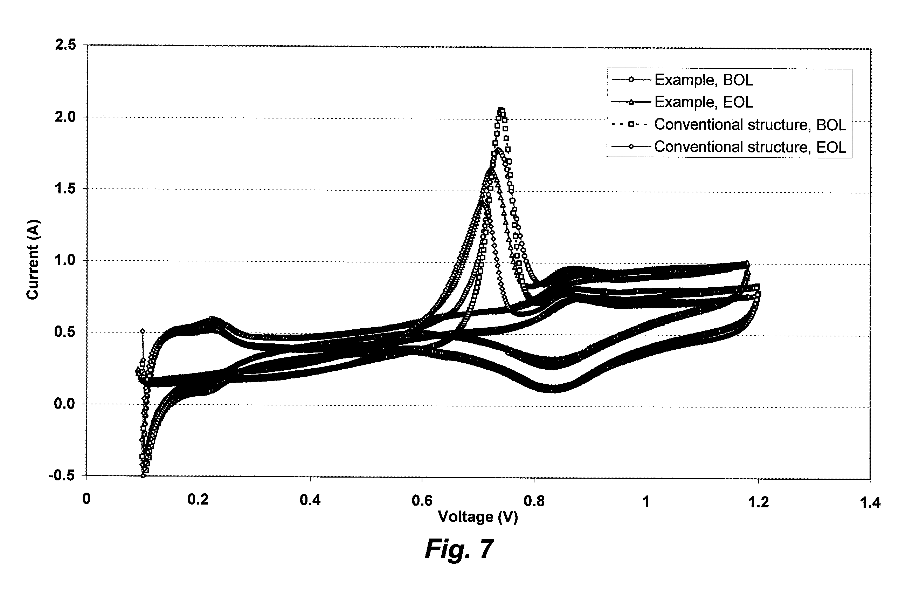

Figure 7 shows improved ruthenium crossover of the example structure as compared to the conventional structure.

The above description of illustrated embodiments, including what is described in the Abstract, is not intended to be exhaustive or to limit the embodiments to the precise forms disclosed. Although specific embodiments of and examples are described herein for illustrative purposes, various equivalent modifications can be made without departing from the scope of the disclosure, as will be recognized by those skilled in the relevant art. The teachings provided herein of the various embodiments can be applied to MEAs, not necessarily the exemplary PEM MEAs generally described above.

The various embodiments described above can be combined to provide further embodiments.

These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled. Accordingly, the claims are not limited by the disclosure.

## Claims

1. A fuel cell system (10) comprising a fuel cell and a reactant supply for supplying a reactant comprising gaseous hydrogen and a poisoning species, to the fuel cell; the fuel cell comprising a membrane electrode assembly (100), the membrane electrode assembly (100) comprising:
a cathode substrate (120);
an anode substrate (110);
a proton exchange membrane (130) disposed between the cathode substrate (120) and the anode substrate (110);
an electrochemically separating sublayer (140) disposed between the proton exchange membrane (130) and the anode substrate (110);
a poison-scrubbing catalyst layer (150) disposed between the electrochemically separating sublayer (140) and the anode substrate (110);
an anode electrocatalyst layer (160) disposed between the proton exchange membrane (130) and the electrochemically separating sublayer (140); and
a cathode electrocatalyst layer (170) disposed between the cathode substrate (120) and the proton exchange membrane (130),
**characterized in that** the electrochemically separating sublayer (140) does not comprise cation conducting ionomer.

2. The fuel cell system (10) of claim 1 wherein the poisoning species comprises carbon monoxide.

3. The fuel cell system (10) of claim 2 wherein the electrochemically separating sublayer (140) is comprised of carbon and polytetrafluoroethylene.

4. The fuel cell system (10) of claim 3 wherein the poison-scrubbing catalyst layer (150) comprises catalyst means for scrubbing poison.

5. The fuel cell system (10) of claim 3 wherein the poison-scrubbing catalyst layer (150) comprises at least one of platinum, ruthenium and combinations thereof.

6. The fuel cell system (10) of claim 3 wherein the poison-scrubbing catalyst layer (150) is supported on a catalyst support.

7. The fuel cell system (10) of claim 6 wherein the catalyst support comprises at least one of carbon, tungsten oxide, tungsten carbide and combinations thereof.

8. The fuel cell system (10) of claim 6 wherein the catalyst support comprises at least one of zeolite, silica, alumina, titania and combinations thereof.

9. The fuel cell system (10) of claim 3 wherein the anode electrocatalyst layer (160) comprises platinum.

10. The fuel cell system (10) of claim 1 wherein the electrochemically separating sublayer (140) is in direct physical contact with the poison-scrubbing catalyst layer (150) on one face of the electrochemically separating sublayer (140), and in direct physical contact with the anode electrocatalyst layer (160) on an opposing face of the electrochemically separating sublayer (140).

## Patentansprüche

1. Brennstoffzellensystem (10), mit einer Brennstoffzelle und einer Reaktionsmittelzuführung zum Zuführen eines Reaktionsmittels, welches gasförmigen Wasserstoff und eine vergiftende Spezies enthält, zur Brennstoffzelle, wobei die Brennstoffzelle eine Membran-Elektrodeneinheit (100) aufweist, wobei die Membran-Elektrodeneinheit (100) umfasst:
ein Kathodensubstrat (120),
ein Anodensubstrat (110),
eine Protonenaustauschmembran (130), die zwischen dem Kathodensubstrat (120) und dem Anodensubstrat (110) angeordnet ist,
eine elektrochemisch trennende Unterschicht (140), die zwischen der Protonenaustauschmembran (130) und dem Anodensubstrat (110) angeordnet ist,
eine Gift auswaschende Katalysatorschicht (150), die zwischen der elektrochemisch trennenden Unterschicht (140) und dem Anodensubstrat (110) angeordnet ist,
eine Anoden-Elektrokatalysatorschicht (160), die zwischen der Protonenaustauschmembran (130) und der elektrochemisch trennenden Unterschicht (140) angeordnet ist, und
eine Kathoden-Elektrokatalysatorschicht (170), die zwischen dem Kathodensubstrat (120) und der Protonenaustauschmembran (130) angeordnet ist,
**dadurch gekennzeichnet, dass** die elektrochemisch trennende Unterschicht (140) keinen kationenleitenden Ionomer umfasst.

2. Brennstoffzellensystem (10) nach Anspruch 1, bei dem die vergiftende Spezies Kohlenmonoxid umfasst.

3. Brennstoffzellensystem (10) nach Anspruch 2, bei dem die elektrochemisch trennende Unterschicht (140) aus Kohlenstoff und Polytetrafluorethylen besteht.

4. Brennstoffzellensystem (10) nach Anspruch 3, bei dem die Gift auswaschende Katalysatorschicht (150) Katalysatormittel zum Auswaschen von Gift umfasst.

5. Brennstoffzellensystem (10) nach Anspruch 3, bei dem die Gift auswaschende Katalysatorschicht (150) Platin und/oder Ruthenium und/oder Kombinationen daraus umfasst.

6. Brennstoffzellensystem (10) nach Anspruch 3, bei dem die Gift auswaschende Katalysatorschicht (150) auf einem Katalysatorträger geträgert ist.

7. Brennstoffzellensystem (10) nach Anspruch 6, bei dem der Katalysatorträger Kohlenstoff und/oder Wolframoxid und/oder Wolframcarbid und/oder Kombinationen daraus umfasst.

8. Brennstoffzellensystem (10) nach Anspruch 6, bei dem der Katalysatorträger einen Zeolith und/oder Siliziumdioxid und/oder Aluminiumoxid und/oder Titandioxid und/oder Kombinationen daraus umfasst.

9. Brennstoffzellensystem (10) nach Anspruch 3, bei dem die Anoden-Elektrokatalysatorschicht (160) Platin umfasst.

10. Brennstoffzellensystem (10) nach Anspruch 1, bei dem die elektrochemisch trennende Unterschicht (140) in unmittelbarem körperlichem Kontakt mit der Gift auswaschenden Katalysatorschicht (150) auf einer Seite der elektrochemisch trennenden Unterschicht (140) und in unmittelbarem körperlichem Kontakt mit der Anoden-Elektrokatalysatorschicht (160) auf einer entgegengesetzten Seite der elektrochemisch trennenden Unterschicht (140) steht.

## Revendications

1. Système (10) de pile à combustible comprenant une pile à combustible et une alimentation de réactif destinée à délivrer un réactif comprenant de l'hydrogène gazeux et des espèces empoisonnantes, vers la pile à combustible ; la pile à combustible comprenant un ensemble membrane-électrode (100), l'ensemble membrane-électrode (100) comprenant :
un substrat de cathode (120) ;
un substrat d'anode (110) ;
une membrane d'échange de protons (130) disposée entre le substrat de cathode (120) et le substrat d'anode (110) ;
une sous-couche de séparation électrochimique (140) disposée entre la membrane d'échange de protons (130) et le substrat d'anode (110) ;
une couche catalytique de lavage de poison (150) disposée entre la sous-couche de séparation électrochimique (140) et le substrat d'anode (110) ;
une couche électrocatalytique d'anode (160) disposée entre la membrane d'échange de protons (130) et la sous-couche de séparation électrochimique (140) ;
et
une couche électrocatalytique de cathode (170) disposée entre le substrat de cathode (120) et la membrane d'échange de protons (130),
**caractérisé en ce que** la sous-couche de séparation électrochimique (140) ne comprend pas de ionomère conducteur de cation.

2. Système (10) de pile à combustible selon la revendication 1, dans lequel les espèces empoisonnantes comprennent le monoxyde de carbone.

3. Système (10) de pile à combustible selon la revendication 2, dans lequel la sous-couche de séparation électrochimique (140) est composée de carbone et de polytétrafluoroéthylène.

4. Système (10) de pile à combustible selon la revendication 3, dans lequel la couche catalytique de lavage de poison (150) comprend un moyen catalytique destiné à laver le poison.

5. Système (10) de pile à combustible selon la revendication 3, dans lequel la couche catalytique de lavage de poison (150) comprend au moins l'un parmi le platine, le ruthénium et une combinaison de ceux-ci.

6. Système (10) de pile à combustible selon la revendication 3, dans lequel la couche catalytique de lavage de poison (150) est supportée sur un support catalytique.

7. Système (10) de pile à combustible selon la revendication 6, dans lequel le support catalytique comprend au moins l'un parmi le carbone, l'oxyde de tungstène, le carbure de tungstène et des combinaisons de ceux-ci.

8. Système (10) de pile à combustible selon la revendication 6, dans lequel le support catalytique comprend au moins l'un parmi la zéolite, la silice, l'alumine, le dioxyde de titane et des combinaisons de ceux-ci.

9. Système (10) de pile à combustible selon la revendication 3, dans lequel la couche électrocatalytique d'anode (160) comprend du platine.

10. Système (10) de pile à combustible selon la revendication 1, dans lequel la sous-couche de séparation électrochimique (140) est en contact physique direct avec la couche catalytique de lavage de poison (150) sur une face de la sous-couche de séparation électrochimique (140), et en contact physique direct avec la couche électrocatalytique d'anode (160) sur une face opposée de la sous-couche de séparation électrochimique (140).
